Europäisches Patentamt

European Patent Office

Office européen des brevets

(19)

(11) Publication number: **0 267 027 B1**

# EUROPEAN PATENT SPECIFICATION

(12)

(45) Date of publication of patent specification: **29.05.91**   (51) Int. Cl.5: **F16D 13/64**

(21) Application number: **87309775.2**

(22) Date of filing: **04.11.87**

(54) Segment-type friction plate.

(30) Priority: **04.11.86 JP 260647/86**
**10.04.87 JP 87117/87**
**29.05.87 JP 131877/87**

(43) Date of publication of application:
**11.05.88 Bulletin 88/19**

(45) Publication of the grant of the patent:
**29.05.91 Bulletin 91/22**

(84) Designated Contracting States:
**DE FR GB IT**

(56) References cited:
**FR-A- 894 029      FR-A- 1 252 818**
**FR-A- 1 268 697    GB-A- 939 720**
**GB-A- 944 578       GB-A- 1 460 592**
**US-A- 4 202 432**

(73) Proprietor: **DAIKIN-R/M CO. LTD.**
**1053-2, Kamiosatsu**
**Chitose-shi Hokkaido(JP)**

(72) Inventor: **Kubota, Masamitsu**
**4-4, Shirakaba 5-chome**
**Chitose-shi Hokkaido(JP)**
Inventor: **Murai, Noriyuki**
**282-18 Sumiyoshi-cho**
**Eniwa-shi Hokkaido(JP)**

(74) Representative: **Meddle, Alan Leonard et al**
**FORRESTER & BOEHMERT Widenmayer-**
**strasse 4/I**
**W-8000 München 22(DE)**

## Description

THIS INVENTION relates to a segment-type friction plate to be used in friction coupling devices, and is adapted for use where a cooling liquid is caused to flow across the friction plate. The invention is particularly applicable to clutches and brakes having a flat annular friction plate(s) mounted on a cylindrical core and cooperable with a flat annular reaction plate(s) mounted in a hollow cylindrical housing surrounding the core.

Segment-type friction plates have been produced by securing (normally by an adhesive) a friction material (a single one of various kinds of friction materials having a paper base, a rubber base or the like) on a core plate. In this instance, it has been the usual practice to arrange the friction material in segments about the peripheral zone of friction plate with the segments alongside one another in such a manner as to cover the entire surface in the peripheral zone of the core plate. In order to provide flow passages for a cooling liquid (oil) on such a segment-type friction plate, there have been employed various methods, including the grooving method, the wave-forming method and the method of positioning the segmental friction members at intervals of 1.0 mm to 1.4 mm. In any event, it has been fundamental concept to cover the entire surface in the peripheral zones of the core plate with the friction material.

As typical examples of friction materials, there are friction materials used for the clutches of construction and industrial vehicles and friction materials used for the clutches of passenger car transmissions. Comparing their characteristics, the friction materials for passenger cars are high in dynamic friction coefficient while the friction materials for industrial vehicles are relatively high in lock-up (after completion of engagement) or static friction coefficient.

The low load friction materials used for automatic transmissions of passenger cars have a high elastic deformation rate and have a high dynamic friction coefficient and a low lock-up or static friction coefficient as mentioned above, so that they are inferior in strength or heat resistance although the shock of engagement (on completion of engagement) is small. On the other hand, the high load friction materials which are use for industrial vehicles have a high lock-up or static friction coefficient and therefore they naturally have excellent strength and heat resistance though they are apt to be accompanied by a shock at the time of engagement.

The invention concerns a friction plate of the kind comprising an annular core plate having an annular peripheral area being one piece with the core plate, said peripheral area constituting a friction zone to which segments of friction material are secured with gaps therebetween, the total area of said friction material occupying more than 1/4 and less than 4/5 of the area of said friction zone. The gaps between the segments of frictional material and the restricted area of such segments result in favourable cooling of the friction plate by cooling oil flowing through the gaps, whilst retaining satisfactory frictional properties.

A friction plate of this kind is disclosed in British Patent GB 939720 in which the segments of frictional material are produced by grooving an annular layer of a single kind of friction material secured to the friction zone of the core plate, so as to divide the friction material into segments. Whilst this known construction provides satisfactory cooling of the friction plate, the frictional properties of the plate are limited by the fact that the segments are cut from a layer of a single kind of friction material.

It is an object of the present invention to provide a friction plate of this kind in which the frictional properties of the plate are more readily variable.

Accordingly, the invention provides a friction plate comprising an annular core plate having an annular peripheral area being one piece with the core plate, said peripheral area constituting a friction zone to which segments of friction material are secured with gaps therebetween, the total area of said friction material occupying more than 1/4 and less than 4/5 of the area of said friction zone, characterised in that said segments are preshaped segments made from at least two different friction materials and secured to the plate in spaced apart relationship to define said gaps.

The number of the segments may be between 2 and 24, inclusive. As well as differing in kind of frictional material, the segments of friction material may differ from each other in shape, thickness and/or area, and have no restrictions in particular with regard to their disposition. The gaps or void portions between the segments thus arranged are useful as flow passages for cooling oil.

A friction plate embodying the invention may employ segments of high and low load friction materials in combination to make use of the characteristics of the respective friction materials in different stages of engagement. The expressions "high" and "low" or "large" and "small" which appear here and in the following description are used in comparison of two different kinds of friction materials relative to the other.

The segments which are relatively high in elastic deformation rate and dynamic friction coefficient are preferably formed in a relatively large thickness, while the segments which are relatively low in elastic deformation rate and high in static friction coefficient are preferably formed in a relatively small thickness.

Further, by forming the end face of each segment of friction material in a tapered or beveled shape, it becomes possible to promote formation of a squeeze oil film.

Needless to say, the above-mentioned features apply to each side of the core plate which normally has friction material bonded on both sides thereof.

In order that the invention may be readily understood, embodiments thereof will now be described, by way of example, with reference to the accompanying drawings, in which:

Figure 1 is a face view of a friction plate embodying the present invention;

Figures 2, 3 and 4 are face views of additional embodiments;

Figs. 5 and 6 is a typical cross-section through a friction plate made in accordance with the present invention;

Fig. 6 is a view similar to Fig. 5 showing a different orientation of friction material;

Fig. 7 is a face view of a further embodiment of friction plate embodying the present invention;

Fig. 8 is a sectional view through the friction plate of Fig. 7 taken on the line 8-8 of Fig. 7;

Fig. 9 is a fragmentary sectional view of a clutch or brake incorporating friction plates made in accordance with the present invention;

Fig. 10 is a diagram plotting the coefficient of friction of the two separate materials embodied in the friction plate of Fig. 7 at various rotational speeds, and the combined coefficient provided by the combination shown in Fig. 7;

Figs. 11A, 11B and 11C are graphs of endurance tests plotting the coefficient of friction against the number of cycles for different embodiments of the invention, Figs. 11A and 11B showing the slight different effect achieved at different percentages of coverage and also incorporating to the right an indication of the abrasion (mu) resulting at the end of the test, Fig. 11C representing the embodiment of Fig. 7 and showing in the upper part the ratio of the dynamic coefficient of friction to the static coefficient of friction during the endurance test; and

Fig. 12 shows a comparable endurance test and abrasion for a prior art friction plate.

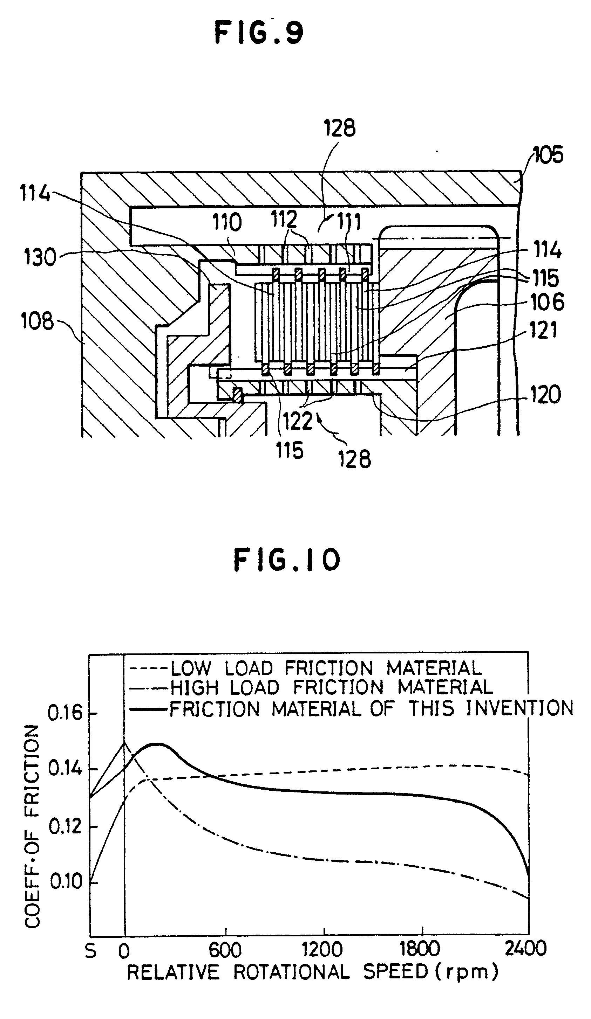

For the purpose of illustration, the friction plates of the present invention are designed to be mounted in speed-controlling mechanisms such as clutch or brake assemblies of the type shown in Fig. 9. As shown, the assembly includes a stationary housing 105 having an outer hollow member 110 projecting from the closed end wall 108 of the housing. The hollow member is in the form of an annular cylindrical shell having apertures 112 disposed radially therein to afford flow of liquid (oil) therethrough. The interior surface of the shell 110 has axially extending splines 111 which support annular reaction plates 114 for axial displacement along the splines.

The rotary member 106 is mounted for rotation within the housing 105 and has mounted on it an inner annular member 120 in the form of a hollow cylindrical shell having radial apertures 122 positioned therein to afford flow of liquid (oil) therethrough. The outer surface of the inner cylindrical shell 120 has axial splines 121 on which friction plates 115 are mounted for axial displacement in interdigitated relation with the reaction plates 114.

A piston 130 is mounted in the end wall 108 of the stationary housing for axial displacement relative to the inner cylindrical shell 122 and is mounted for rotation with the shell so as to bear against the stack of interdigitated reaction plates and friction members 115 and cause them to frictionally engage the confronting surfaces of one another. The piston is conventionally actuated hydraulically to apply the desired axial pressure on the stack of friction and reaction plates to thereby impart a frictional drag against relative rotation between the respective members and to eventually cause the two members to interlock for rotation together in the case of a clutch or for arrest of rotation in the case of a brake. The resistance to rotation is a factor of the dynamic coefficient of friction as the members are relatively rotatable and is a function of the static coefficient of friction when the members are stationary relative to one another. The flow of cooling oil through the assembly is indicated by the arrows 128. The operation of this assembly may be conventional and need not be further described.

In accordance with the present invention, an improved friction plate is provided which has been found to provide efficiencies in operation and manufacture which are not available with the conventional friction plates of the prior art.

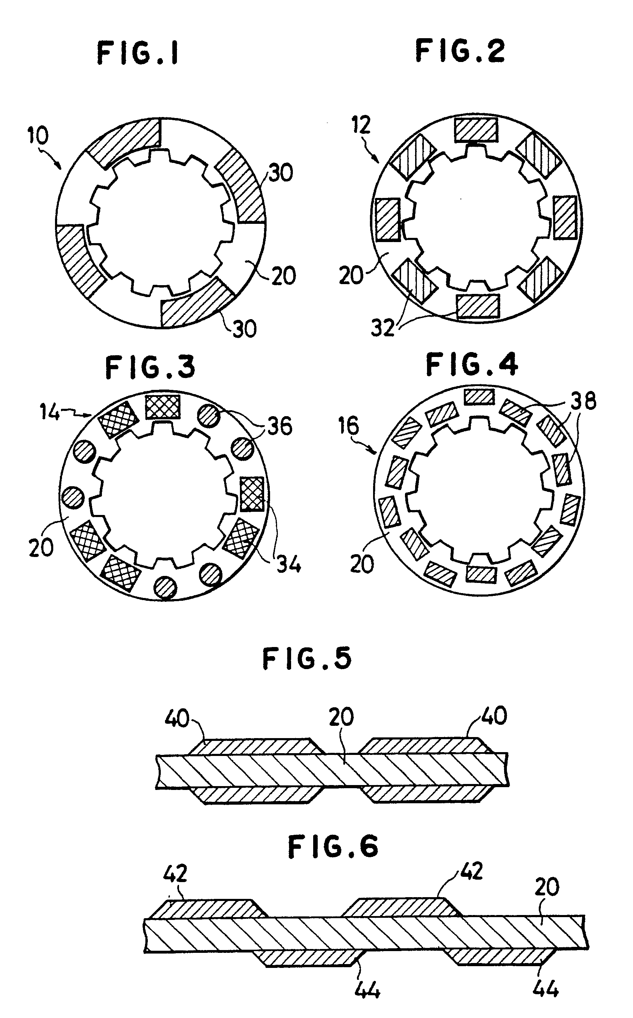

A first embodiment is now described with reference to Fig. 1, in which a friction plate 10 has segmental friction material 30 placed on a core plate 20 such that the friction material is alternated with a void space at every 45 degrees. In this instance, the total area of the segments of the friction material is 1/2 of the area of the core plate which is exposed for fixation of friction material thereto (the peripheral zone between the concentric circles which coincide with the outer and inner diameters of the friction material), hereinafter called the "friction zone".

The number of the segments is selected to be between 2 and 24, inclusive, and the respective segments preferably have a total area which is not less than 1/4 and no greater than 4/5 of the friction zone of the core plate. If the total area of the friction material is less than 1/4 of the friction zone at the periphery of the core plate, the load-carrying ability will become insufficient. If it is greater than 4/5, there will be no significant difference from the conventional products. It is to be noted that the segments 30 extend across the full radial width of the friction zone and are spaced circumferentially to provide gap spaces therebetween.

Figs. 2 to 4 illustrate other embodiments of the friction plate.

In the embodiment shown in Fig. 2, the friction plate 12 has on its core plate 20, for example, square segments of a friction material, which are obtained from a roll or sheet material at an yield of 100%. Although the friction segment on conventional friction plates are invariably cut from a strip in the shape of a sector of a circle, so that they may be closely spaced around the periphery of the friction plate, the present invention has found that there is no need for forming the friction segments in a sector shape and that such a square shape (or a trapezoidal shape) can sufficiently serve for the purpose thereby permitting a 100% yield of the friction material.

In addition, it becomes possible to increase the exposed portions of the core plate around the friction segments, thereby to promote the cooling effect by heat transfer. The core plate is normally made of a material with high heat conductivity to enhance heat-dissipation by radiation. The larger the exposed area, the greater the heat dissipation.

In the embodiment shown in Fig. 3, the friction plate 14 has a first friction segment 34 and a second friction segment 36 mounted on its core plate 20. The first and second friction segments 34 and 36 are different in shape and of different compositons. The arrangement can produce composite friction performance.

The friction plate 16 of the fourth embodiment shown in Fig. 4 has the segments of a friction material 38 mounted on a core plate 20 in such a manner as to vary both the gaps and the radial positions of the segments, promoting turbulence of the cooling oil to enhance its cooling effect.

As shown in Fig. 5, segments of friction material 40 are bonded to both sides of a core plate 20. The end faces of the friction material 40 are in a beveled or tapered form (with no particular restrictions on the taper angle) to promote formation of a squeeze oil film between the friction plate and the opposing reaction plate during operation. Although not essentially required, it is desirable to form all of the end faces of each segment in the tapered shape.

Fig. 6 shows an embodiment in which friction segments 42 and 44 are mounted on the front and rear sides of the core plate 20 with a phase shift from each other.

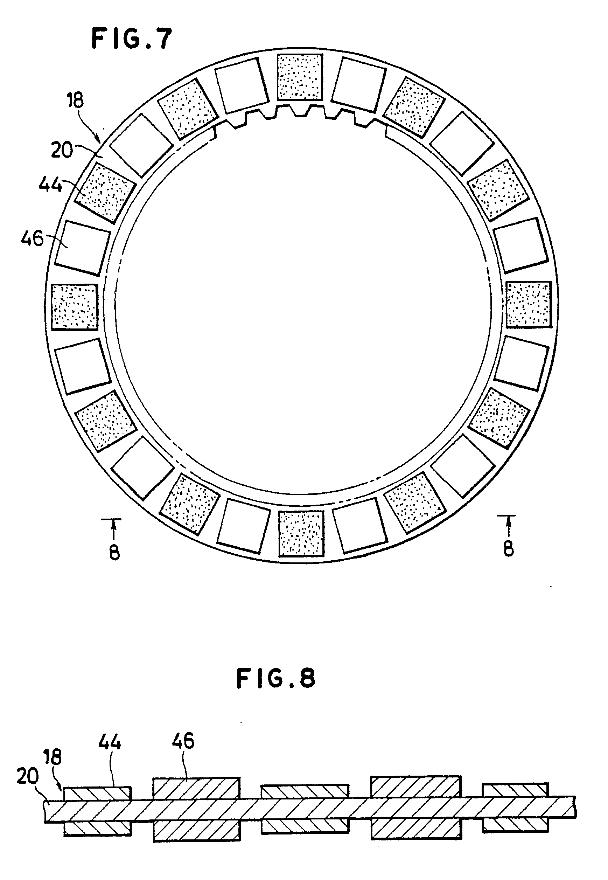

Figs. 7 and 8 show an embodiment of friction plate 18 employing two different kinds of friction materials. Fixedly mounted on both sides of a core plate 20 are segments 44 of a high load friction material or a first friction material and segments 46 of a low load friction material or a second friction material at predetermined intervals in the circumferential direction. The friction materials of the respective segments are different in nature, the high load friction materials 44 having a smaller thickness than the low load friction material 46.

The high load friction material 44 is of the type which is mainly used for construction and industrial vehicles and consists of a material with a large graphite content and of high density, which has high strength, a high static friction coefficient, a low elastic deformation rate, and excellent heat resistance.

On the other hand, the low load friction material 46 consists of, for example, a resin material which has a high dynamic friction coefficient and a high elastic deformation rate. As the low load friction material 46 is thicker than the high load friction material 44, it firstly starts to engage in an initial stage of the engagement, and is compressed due to its high elastic deformation rate as the engagement proceed to a certain extent. Whereupon, the high load friction material 14 starts sliding to transmit the torque through both friction materials.

In case of a clutch, for example, the low load friction material commences engagement in an initial stage of frictional engagement under low pressure and high speed condition, and the friction plate rubs against the reaction plate with a high dynamic friction coefficient to lower the relative rotational speeds. As the pressure is increased, the low load friction material is compressed due to its high elastic deformation rate. Then, the high load friction material begins sliding to share the frictional heat. As the engagement proceeds, the characteristics of the high load friction material prevail since the load is supported mainly by the high load friction material. However, since the level of the dynamic friction coefficient of the friction plate as a whole is raised by the low load friction material, the difference of the resultant coefficient relative to the high load friction material with high lock-up and static friction coefficient is minimized to provide smooth operating characteristics.

Fig. 10 shows "friction coefficient/speed" characteristics of the friction plate of this embodiment of the invention and friction plates with only a high or low load friction material in an endurance test for 200 coupling cycles. In this figure, the values against the X-axis which is labelled with "S" indicate the static friction coefficient. The difference between the lock-up friction coefficient at the relative speed of 0 and the static friction coefficient is attributable to the friction heat generated at the time of lock-up and to the oil film. As shown in that figure, the low load friction material is high in dynamic friction coefficient when the relative speed is high, for example, at 1200 r.p.m., while the high load friction material is high when the relative speed is low, for example, in lock-up (at zero relative speed) friction coefficient and static friction coefficient.

The combination of the friction materials in this embodiment gives composite characteristics of the two materials, permitting to utiliize the characteristics of the high dynamic friction coefficient of the low load friction material at high relative speeds and to utilize the high lock-up friction coefficient of the high load friction material at low relative speeds and after completion of engagement.

The friction plate of this embodiment operates in the manner as follows.

Wet segment-type clutches and brakes generally have a maximum relative speed at the moment of commencing engagement, and its pressure is increased gradually from an initial contact point through preset steps until the engagement is completed. After completing the engagement, the pressure is applied further to maintain the static torque transmission. With respect to these functions, in case of a clutch, for example, the friction materials of the present embodiment operate in the following manner. In an initial stage of engagement where the relative rotational speed is high and the pressure is low, the low load friction material slides. As the pressure is increased, the low load friction material is compressed and the high load friction material of a smaller thickness begins to slide. Then, the load is supported mainly by the high load friction material, so that the characteristics of the high load friction material with a high lock-up friction coefficient come to prevail on the friction plate as a whole. However, as the friction plate simultaneously possesses the characteristics of the low load friction material, the difference between the dynamic friction coefficient of the low load friction material and the lock-up friction coefficient of the high load friction material, ensures smooth operating characteristics until completion of the engagement. Although the torque transfer surfaces of the clutch receive a high surface pressure when the engagement is completed, it is possible to cope with the high surface pressure conditions to obtain the static clutch torque capacity and to utilize to a full extent the high static friction coefficient of the high load friction material which has a strong influence in this stage.

As described hereinbefore, the friction material according to the present invention consists of 2 to 24 segments, preferably 3 to 10 segments, which are the same or different in material, shape or area and located in arbitrary positions including their phases on the front and rear side of the core plate.

In case of a friction plate which is pressed with the same pressure irrespective of the frictional area, the product of the present invention which works through a reduced frictional area naturally receives a higher surface pressure. However, this causes no drop in capacity since the generated torque is received by an increased shearing force thanks to the load-carrying ability of the oil film mentioned hereinbefore. Besides, the oil which is supplied through wider gap spaces solves the problem of heat resistance of the friction material.

In addition to the multiple plate-type frictional coupling devices, such as the speed-controlling apparatus of Fig. 9, the friction plate of the present invention is naturally applicable to single plate type frictional coupling devices.

Experimental Examples

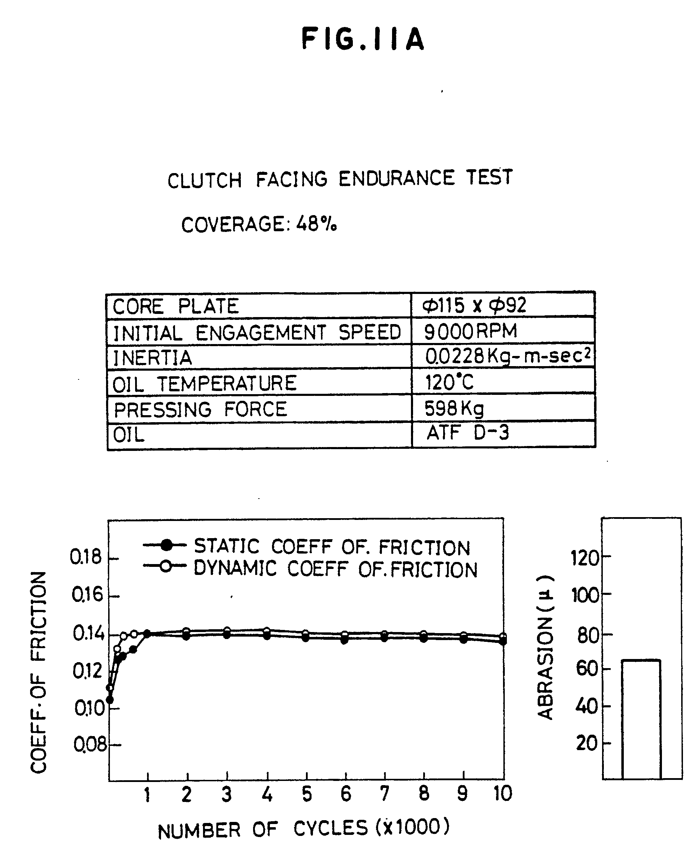

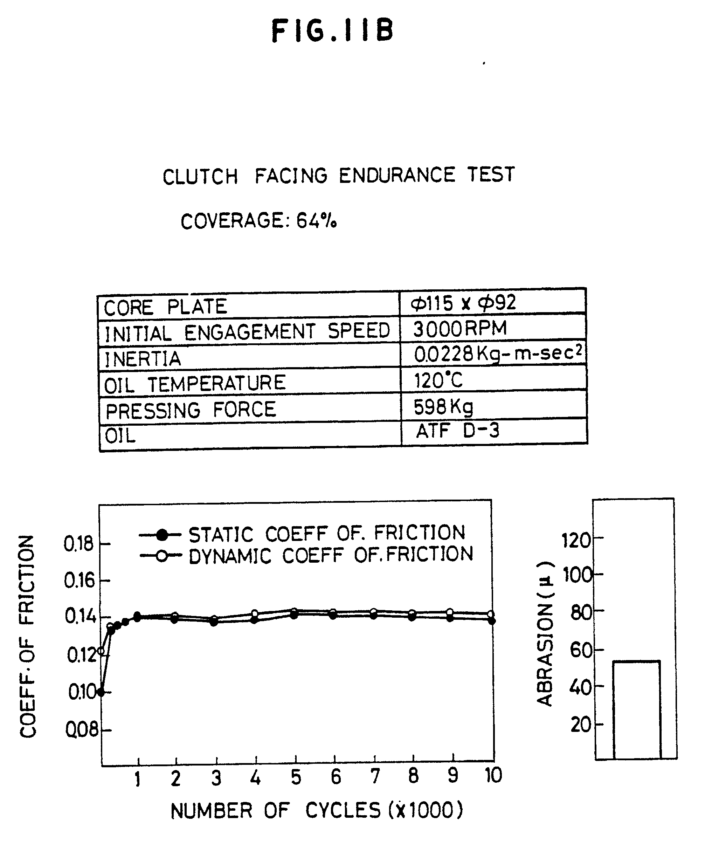

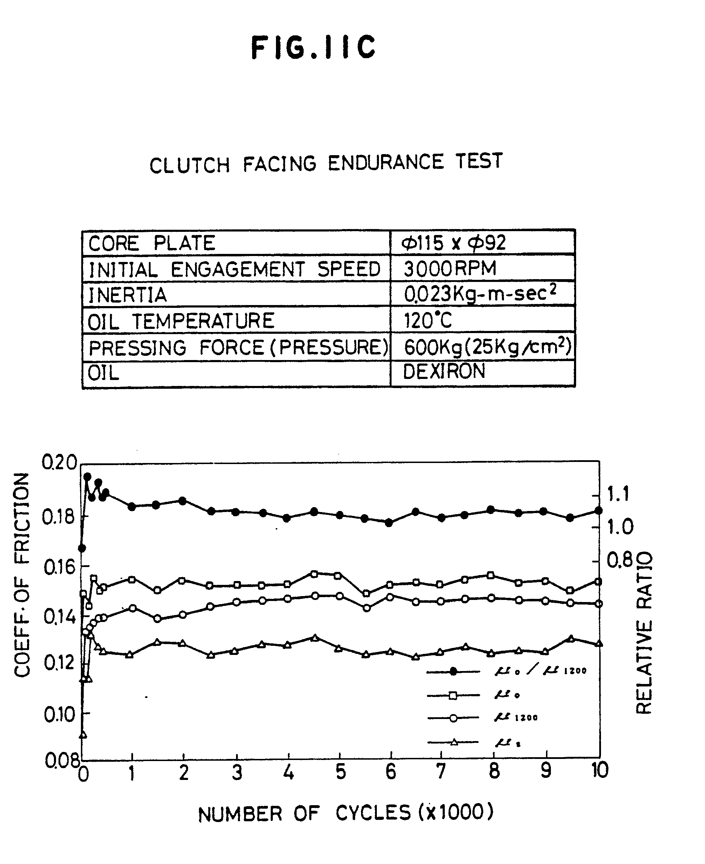

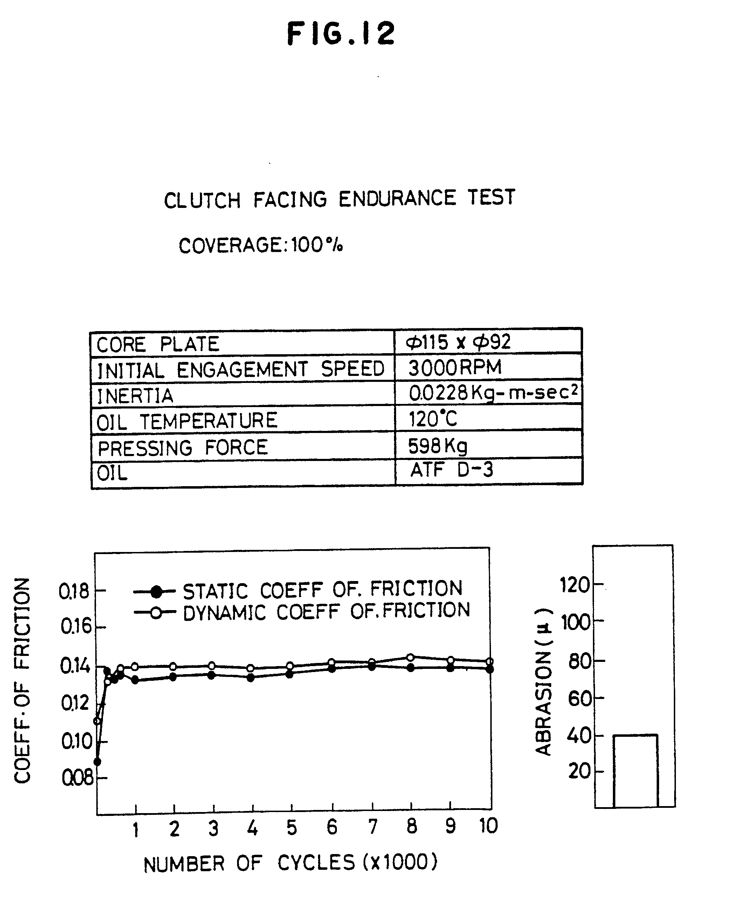

Figs. 11A to 11C and Fig. 12 show the results of an endurance test of clutch facings, namely, in Fig. 11A of a clutch facing having a friction material secure on 48% of the friction zone of the core plate (the first embodiment), in Fig. 11B of a clutch facing the friction material secure on 64% of the friction zone (the second embodiment), and in Fig. 11C of a clutch facing having friction material as shown in Fig. 7. Fig. 12 shows a clutch facing having the friction material on 100% of the friction zone (the conventional product). Variations in friction coefficient in each test are expressed as a function of the number of cycles up to 10,000 cycles, measuring the amount of abrasion after the test and indicating by way of a mean value of N (the number of samples) = N in Figs. 11A, 11B and 12.

It will be seen therefrom that the amounts of abrasion in both tests of Figs. 11A and 11B are slightly larger than the conventional product in the test of Fig. 12. However, considering that the allowable abrasion under the specified condition is 80 microns, the embodiments of the invention have been proved to have no problem in durability in practical use and to be comparable to the conventional product in performance quality in spite of the fact that it is subjected to a higher surface pressure than the conventional products. It is noteworthy that the coefficients of friction in all of these tests is virtually the same.

Fig. 11C shows the results of an experiment which was conducted to examine whether or not the friction plate of Fig. 7 could endure practical use.

In Fig. 11C, timewise variations in static friction coefficient $mu_s$, friction coefficient $mu_o$ at the zero

relative rotational speed corresponding to Fig. 10, friction coefficient $mu_{1200}$ at the relative rotational speed of 1200 r.p.m. and friction ratio of $mu_0/mu_{1200}$ are plotted against the number of cycles up to 10,000 cycles. From these experimental results, it has been confirmed that the friction plate can maintain the initial characteristics with respect to the friction coefficient and friction ratio free of variations with time, proving that it has no problems in durability for practical use.

Regarding the abrasive wear of the respective friction materials in the above-described experiment, the amounts of abrasion on both sides of a friction plate were 65 microns with respect to the low load friction material and 35 microns with respect to the high load friction material, which have been proved to be free of problems of endurance in practical use. Further, the ratio of the friction coefficient at the relative rotational speed of 1,200 r.p.m. to the friction coefficient at zero relative rotational speed or in lock-up was approximately 1. It follows that the friction ratio could be held to a lower value in the present embodiment due to the existence of the low load material, as compared with the ratio of the high load friction material shown in Fig 10, lessening the shock of engagement.

Although the present invention is mainly directed to wet segment-type friction plates, it should be understood that the technical concept of the invention can also be applied to dry-type friction plates.

Effects of the Invention

It becomes possible to reduce the amount of the friction material to a considerable degree as compared with the conventional counterparts, permitting to cut the cost. In addition, a 100% yield of the friction material an be attained by the use of square segments.

The cooling effect can be promoted by the increased exposed areas of the heat-conductive material of the core plate and by the agitating action of the segments on the cooling liquid.

According to the embodiment of the invention shown in Fig. 7, it is possible to obtain friction paltes with smooth characteristics of engagement along with durability and heat resistance owing to the composite characteristics accruing from the combination of the high and low load friction materials.

Since the use of the inexpensive low load friction material permits reduction in the amount of the costly high load friction material, high performance friction plates comparable to the high load friction material are obtained without necessitating a fresh investment on research and development.

## Claims

1. A friction plate (10, 115) comprising an annular core plate (20) having an annular peripheral area being one piece with the core plate, said peripheral area constituting a friction zone to which segments (30 or 32 or 34, 36 or 38 or 40 or 42 or 44, 46) of friction material are secured with gaps therebetween, the total area of said friction material occupying more than 1/4 and less than 4/5 of the area of said friction zone, characterised in that said segments (30 or 32 or 34, 36 or 38 or 40 or 42 or 44, 46) are preshaped segments made from at least two different friction materials and secured to the plate (20) in spaced apart relationship to define said gaps.

2. A friction plate according to claim 1, wherein said friction segments (44, 46) are formed of different kinds of friction material of different thicknesses.

3. A friction plate according to claim 2, wherein the thicker segments (46) are made of a high-dynamic-friction-coefficient material having a relatively high elastic deformation rate and said thinner segments (44) are made with a high-static-friction-coefficient material having a low elastic deformation rate.

4. A friction plate according to any one of claims 1 to 3, wherein said friction segments (30 or 32 or 34, 36 or 38 or 40 or 44, 46) are 2 to 24 in number.

5. A friction plate according to any preceding claim, wherein the end faces of each segment (40 or 42) of friction material are bevelled.

6. A friction plate according to any preceding claim, wherein said segments (34, 36) are of different shapes.

7. A friction plate according to any preceding claim, wherein said segments (44, 46) are spaced to provide differing gaps therebetween.

8. A friction plate according to any preceding claim, wherein said friction zone is annular and each of said segments (30) extends radially across the full radial width of said friction zone.

9. A friction plate according to any one of claims 1 to 7, wherein said friction zones is annular, and said segments (38) are positioned in differing radial positions.

10. A friction plate according to any one of claims 1 to 9, said core plate (20) comprising an annular plate of high-heat-conductive material of uniform thickness to provide parallel annular surfaces, each surface having an annular friction zone defined between the inner and outer radial limits of said plural number of segments (30 or 32 or 34, 36 or 38 or 40 or 42 or 44, 46) of friction material.

11. A friction plate (115) according to any preceding claim, for use in a frictional coupling device of the wet-type wherein the annular friction plate (115) is mounted to confront and bear against a concentric reaction surface (114), wherein means (112, 122) are provided to cause liquid to flow between said plate (115) and said surface (114), and wherein said segments (30 or 32 or 34, 36 or 38 or 40 or 42 or 44, 46) are spaced apart circumferentially of said friction zone to provide radially-extending gap spaces for the flow of liquid therethrough.

12. A frictional coupling device comprising a plurality of annular friction plates (115) in accordance with any preceding claim coaxially interdigitated with a plurality of annular reaction plates (114), said plates (115) being mounted for relative rotation about their common axis, and means (130) to displace said plates axially into face-engaging relationship.

13. A device according to claim 12, including a housing (110) surrounding said plates, a core (120) within said plates and means (112, 122) to cause flow of liquid through said core (120) and said housing (110) and across the friction zones of said friction plates (115).

## Revendications

1. Plateau à friction (10, 115) constitué par une plaque centrale annulaire (20) présentant une surface périphérique annulaire d'une seule pièce avec la plaque centrale, cette surface périphérique constituant une zone de friction sur laquelle des segments (30 ou 32 ou 34, 36 ou 38 ou 40 ou 42 ou 44, 46) réalisés en un matériau de friction sont fixés avec des espaces entre eux, la surface totale de ce matériau de friction occupant plus du quart et moins des 4/5 de la surface de la zone de friction, caractérisé en ce que les segments (30 ou 32 ou 34, 36 ou 38 ou 40 ou 42 ou 44, 46) sont des segments préformés réalisés à partir d'au moins deux matériaux de friction différents et fixés sur la plaque (20) en relation espacée pour définir ces espaces vides.

2. Plateau à friction selon la revendication 1, dans lequel les segments de friction (44, 46) sons réalisés à partir de différents matériaux de friction de différentes épaisseurs.

3. Plateau à friction selon la revendication 2, dans lequel les segments plus épais (46) sont réalisés à partir d'un matériau à coefficient de friction dynamique élevé présentant un taux de déformation élastique relativement élevé et les segments plus minces (44) sont réalisés a partir d'un matériau à coefficient de friction statique élevé ayant un faible taux de déformation élastique.

4. Plateau à friction selon l'une quelconque des revendications 1 à 3, dans lequel les segments de friction (30 ou 32 ou 34, 36 ou 38 ou 40 ou 44, 46) sont au nombre de 2 à 24.

5. Plateau à friction selon l'une quelconque des revendications précédentes, dans lequel les faces d'extrémité de chaque segment (40 ou 42) du matériau de friction sont biseautées.

6. Plateau à friction selon l'une quelconque des revendications précédentes, dans lequel les segments (34, 36) sont de formes différentes.

7. Plateau à friction selon l'une quelconque des revendications précédentes, dans lequel les segments (44, 46) sont espacés pour fournir des espaces libres variables entre eux.

8. Plateau à friction selon l'une quelconque des revendications précédentes, dans lequel la zone de friction est annulaire et chacun des segments (30) s'étend radialement sur toute la largeur radiale de la zone de friction.

9. Plateau à friction selon l'une quelconque des revendications 1 à 7, dans lequel la zone de friction est annulaire et les segments (38) sont agencés dans des positions radiales variables.

10. Plateau à friction selon l'une quelconque des revendications 1 à 9, dans lequel la plaque centrale (20) est constituée d'une plaque annulaire en matériau à conductibilité thermique élevée d'une épaisseur uniforme pour fournir des surfaces annulaires parallèles, chaque surface ayant une zone de friction annulaire définie entre les limites radiales intérieures et extérieures de la pluralité de segments (30 ou 32 ou 34, 36 ou 38 ou 40 ou 42 ou 44, 46) réalisés en un matériau de friction.

11. Plateau à friction (115) selon l'une quelconque des revendications précédentes destiné à l'utilisation dans un dispositif d'accouplement à friction du type humide, dans lequel le plateau à friction annulaire (115) est monté de façon à faire face et prendre appui contre une surface de réaction concentrique (114), dans lequel des moyens (112, 122) sont prévus pour faire s'écouler le liquide entre la plaque (115) et la surface (114) et dans lequel les segments (30 ou 32 ou 34, 36 ou 38 ou 40 ou 42 ou 44, 46) sont espacés entre eux sur la circonférence de la zone de friction pour fournir des espaces libres s'étendant radialement pour l'écoulement du liquide à travers ceux-ci.

12. Dispositif d'accouplement à friction comprenant une pluralité de plaques de friction annulaires (115) selon l'une quelconque des revendications précédentes, imbriquées coaxialement avec une pluralité de plaques de réaction annulaires (114), ces plaques (115) étant montées pour la rotation relative autour de leur axe commun, et des moyens (130) pour déplacer ces plaques axialement en relation d'engagement frontal.

13. Dispositif selon le revendication (12), comprenant un logement (110) entourant ces plaques, une partie centrale ou noyau (120) à l'intérieur des plaques et des moyens (112, 122) pour provoquer l'écoulement du liquide à travers la partie centrale ou noyau (120) et le logement (110) et sur toutes les zones de friction des plaques de friction (115).

**Ansprüche**

1. Reibungsplatte (10,115) mit einer ringförmigen Kernplatte (20), welche eine ringförmige Umfangsfläche aufweist, die einstückig mit der Kernplatte ist, wobei die Umfangsfläche einen Reibungsbereich bildet, an den Segmente (30 oder 32 oder 34, 36 oder 38 oder 40 oder 42 oder 44, 46) aus Reibungsmaterial mit dazwischenliegenden Lücken befestigt sind, wobei die Gesamtfläche des Reibungsmateriales mehr als 1/4 und weniger als 4/5 der Fläche des Reibungsbereiches belegt, dadurch gekennzeichnet, daß die Segmente (30 oder 32 oder 34, 36 oder 38 oder 40 oder 42 oder 44, 46) vorgeformte Segmente sind, die aus wenigstens zwei unterschiedlichen Reibungsmaterialien hergestellt und an der Platte (20) mit gegenseitiger Entfernung befestigt sind, um die Lücken zu definieren.

2. Reibungsplatte nach Anspruch 1, bei der die Reibungssegmente (44, 46) aus verschiedenen Arten von Reibungsmaterial unterschiedlicher Dicke gebildet sind.

3. Reibungsplatten nach Anspruch 2, bei der die dickeren Segmente (46) aus einem Hochdynamikreibungskoeffizient-Material mit einem relativ hohen Verhältnis der elastischen Deformation und die dünneren Segmente (44) mit einem Hochstatikreibungskoeffizient-Material mit einem geringem Verhältnis der elastischen Deformation hergestellt sind.

4. Reibungsplatte nach einem der Ansprüche 1 bis 3, bei der die Anzahl der Reibungssegmente (30 oder 32 oder 34, 36 oder 38 oder 40 oder 44, 46) 2 bis 24 beträgt.

5. Reibungsplatte nach einem der vorangehenden Ansprüche, bei der die Endflächen jedes Segmentes (40 oder 42) des Reibungsmaterials abgeschrägt sind.

6. Reibungsplatte nach einem der vorangehenden Ansprüche, bei der die Segmente (34, 36) von unterschiedlicher Form sind.

7. Reibungsplatte nach einem der vorangehenden Ansprüche, dadurch gekennzeichnet, daß die Segmente (44, 46) beabstandet sind, um unterschiedliche Lücken zwischen ihnen zu schaffen.

8. Reibungsplatte nach einem der vorangehenden Ansprüche, bei der der Reibungsbereich ringförmig ist und jedes der Segmente (30) sich radial über die volle radiale Breite des Reibungsbereiches erstreckt.

9. Reibungsplatte nach einem der Ansprüche 1 bis 7, bei der der Reibungsbereich ringförmig ist und die Segmente (38) in unterschiedlichen radialen Lagen angeordnet sind.

10. Reibungsplatte nach einem der Ansprüche 1 bis 9, wobei die Kernplatte (20) eine ringförmige Platte aus hochwärmeleitfähigem Material gleichförmiger Dicke aufweist, um parallele ringförmige Flächen zu schaffen, wobei jede Fläche einen ringförmigen Reibungsbereich aufweist, der zwischen den inneren und äußeren radialen Grenzen der Vielzahl von Segmenten (30 oder 32 oder 34, 36 oder 38 oder 40 oder 42 oder 44, 46) des Reibungsmaterials definiert ist.

11. Reibungsplatte (115) nach einem der vorangehenden Ansprüche, zur Verwendung in einer Reibkupplungsvorrichtung vom Naß-Typ, bei der die ringförmige Reibungsplatte (115) so angebracht ist, daß sie einer konzentrischen Reaktionsfläche (114) gegenübersteht und sich an ihr abstützt, wobei Mittel (112,122) vorgesehen sind, die bewirken, daß Flüßigkeit zwischen der Platte (115) und der Fläche (114) fließt, und wobei die Segmente (30 oder 32 oder 34, 36 oder 38 oder 40 oder 42 oder 44, 46) am Unfang des Reibungsbereiches voneinander entfernt sind, um radial sich erstreckende lückenartige Räume für den Durchstrom der Flüssigkeit zu schaffen.

12. Reibkupplungsvorrichtung, mit einer Vielzahl von ringförmigen Reibungsplatten (15) gemäß einem der vorangehenden Ansprüche, die abwechselnd mit einer Vielzahl von ringförmigen Reaktionsplatten (114) angeordnet sind, wobei die Platten (115) für eine relative Drehung um ihre gemeinsame Achse angebracht sind, und mit Mitteln (130) zum Verlagern der Platten in axiale Richtung in eine Flächeneingriffsbeziehung.

13. Vorrichtung nach Anspruch 12, mit einem Gehäuse (110), das die Platten umgibt, einem Kern (120) in den Platten und Mitteln (112,122), die den Fluß von Flüßigkeit durch den Kern (120) und das Gehäuse (110) und durch die Reibungsbereiche der Reibungsplatten (115) bewirken.

# FIG.1

# FIG.2

# FIG.3

# FIG.4

# FIG.5

# FIG.6

## FIG.7

## FIG.8

# FIG.9

# FIG.10

RELATIVE ROTATIONAL SPEED (rpm)

LOW LOAD FRICTION MATERIAL
HIGH LOAD FRICTION MATERIAL
FRICTION MATERIAL OF THIS INVENTION

COEFF.OF FRICTION

# FIG.IIA

CLUTCH FACING ENDURANCE TEST

COVERAGE: 48%

| CORE PLATE | $\phi$115 x $\phi$92 |
|---|---|
| INITIAL ENGAGEMENT SPEED | 9000RPM |
| INERTIA | 0.0228Kg-m-sec$^2$ |
| OIL TEMPERATURE | 120°C |
| PRESSING FORCE | 598Kg |
| OIL | ATF D-3 |

# FIG.IIB

CLUTCH FACING ENDURANCE TEST

COVERAGE: 64%

| CORE PLATE | $\phi$115 x $\phi$92 |
|---|---|
| INITIAL ENGAGEMENT SPEED | 3000 RPM |
| INERTIA | 0.0228 Kg-m-sec$^2$ |
| OIL TEMPERATURE | 120°C |
| PRESSING FORCE | 598 Kg |
| OIL | ATF D-3 |

# FIG.IIC

## CLUTCH FACING ENDURANCE TEST

| CORE PLATE | $\phi115 \times \phi92$ |
|---|---|
| INITIAL ENGAGEMENT SPEED | 3000RPM |
| INERTIA | $0.023Kg\text{-}m\text{-}sec^2$ |
| OIL TEMPERATURE | 120°C |
| PRESSING FORCE (PRESSURE) | 600Kg(25Kg/cm²) |
| OIL | DEXIRON |

# FIG.12

CLUTCH FACING ENDURANCE TEST

COVERAGE:100%

| CORE PLATE | $\phi115 \times \phi92$ |
|---|---|
| INITIAL ENGAGEMENT SPEED | 3000RPM |
| INERTIA | $0.0228\,Kg\text{-}m\text{-}sec^2$ |
| OIL TEMPERATURE | $120°C$ |
| PRESSING FORCE | 598 Kg |
| OIL | ATF D-3 |

STATIC COEFF OF. FRICTION
DYNAMIC COEFF OF.FRICTION

COEFF. OF FRICTION

NUMBER OF CYCLES (x1000)

ABRASION ( μ )